# EUROPÄISCHE PATENTSCHRIFT

(11) **EP 1 752 808 B1**
(45) Veröffentlichungstag und Bekanntmachung des Hinweises auf die Patenterteilung: **07.01.2009**
(21) Anmeldenummer: 06016304.5
(22) Anmeldetag: 04.08.2006
(51) Int. Cl.: G02B 11/00, G02B 27/00

(54) **Strahlteiler für optische Messsysteme zur Bestimmung von Kenngrössen an Werkzeugmaschinen**
Beam splitter for optical measuring systems for determining characteristics parameters on machine tools
Séparateur de faisceau pour des systèmes de mesure optiques destinés à la détermination de grandeurs caractéristiques sur des machines-outils

(30) Priorität: 11.08.2005 DE 102005038362
(43) Veröffentlichungstag der Anmeldung: 14.02.2007
(73) Patentinhaber: Prüftechnik Dieter Busch AG, 85737 Ismaning (DE)
(72) Erfinder: Koch, Christian, 85591 Vaterstetten (DE); Molitor, Thomas, 85635 Höhenkirchen (DE); Ströl, Klaus, 85652 Gelting (DE)

(56) Entgegenhaltungen:
- US-A- 3 424 516
- US-A- 3 722 282
- US-A- 4 005 458
- US-A1- 2002 145 726

## Beschreibung

Die vorliegende Erfindung betrifft ein optisches Element in Form eines Strahlteilers, welcher bevorzugt im Zusammenspiel mit optischen Meßsystemen zur Bestimmung von Kenngrößen an Werkzeugmaschinen, oder zu anderen Meßzwecken eingesetzt wird. Weiterhin betrifft die Anordnung eine Meßvorrichtung, welche ein solches optisches Element enthält. Darüberhinaus betrifft die Erfindung eine Werkzeugmaschine, welche zum Zwecke ihrer Vermessung mit einer solchen Meßvorrichtung bestückt ist oder an welcher eine solche Meßvorrichtung verwendet wird.

Optische Elemente der genannten Art sind beispielsweise bekannt aus der US 5,900,938, auf welche zur Vermeidung von Längen im vollem Umfang Bezug genommen wird.

Aufgabe der Erfindung ist es vorrangig, ein optisches Element zu schaffen, welches als genau rechtwinklig ablenkender Strahlteiler funktioniert und welches unmittelbar in der Lage ist, den Auftreffort eines oder mehrerer einfallender bzw. durchtretender Lichtstrahlen, speziell Laserlichtstrahlen, mit mindestens einem ein- oder zweidmensional auslesbaren optoelektronischen Sensor zu bestimmen.

Das optische Element soll insbesondere auch geeignet sein, in tandemartiger Weise mit einem zweiten, völlig gleichartigen optischen Element zusammenarbeiten, und zwar in dem Sinne, dass in zeitlich abwechselnder Reihenfolge dem ersten und dem zweiten optischen Element zugeordnete erste und zweite antiparallel orientierte Lichtsender in Betrieb genommen werden können, deren Lichtstrahlen abwechselnd auf das zweite bzw. das erste optische Element gerichtet sind bzw. auf dessen mindestens einem optoelektonischen Sensor einfallen.

Eine andere Aufgabe der Erfindung ist es, ein optisches Element zu schaffen, welches allgemein zu Zwecken der elektronischen Bildverarbeitung verwendet werden kann.

Eine zugehörige Aufgabe ist es, eine Meßvorrichtung zu schaffen, welche ein solches optisches Element aufweist.

Ein spezielles Anliegen der Erfindung besteht darin, die erfindungsgemäße Meßvorrichtung (im Folgenden auch als "erfindungsgemäße Vorrichtung" bezeichnet) in diversen Verfahren zur Vermessung von Werkzeugmaschinen zu verwenden.

Diese Aufgabe wird gelöst mit einer Meßvorrichtung und der Verwendung einer solchen Vorrichtung gemäß den unabhängigen Patentansprüchen.

Für die erfindungsgemäße Vorrichtung wird als Basis eine Kombination zweier Prismen vorgesehen, von denen eines ein herkömmliches Pentaprisma ist und das andere als allgemein fünfkantiges Prisma ausgestaltet ist; in Hinblick auf eine besonders kostengünstige Lösung ist das allgemein fünfkantige Prisma jedoch ebenfalls als Pentaprisma ausgelegt. Gemäß der Erfindung wird an mindestens eines dieser Prismen ein ein- oder zweidimensional auslesbarer optoelektronischer Detektor oder Sensor direkt, z.B. durch Verklebung, angebracht. Ein solcher Detektor oder Sensor kann zum Beispiel aus einer positionsdetektierenden Diode (PSD) bestehen oder aus einem pixelorientierten Sensor, d. h. einem Zeilen- oder Matrix-Array basierend auf CCD- oder CMOS-Technologie. Die letztgenannten Bauelemente sind derzeit auch im Megapixelbereich kostengünstig kommerziell erhältlich.

Die Dokumente US 3 722 282 und US 4 892 407 zeigen kompakte optische Meßsysteme bestehend aus zwei fünfflächigen Prismen, die in unmittelbaren Kontakt miteinander stehen.

Der Vorteil der Erfindung besteht darin, dass zunächst durch die Verwendung eines Pentaprismas dafür gesorgt wird, dass in einer ersten Betriebsweise des erfindungsgemäßen optischen Elements oder Strahlteilers ein Teil eines einfallenden Laserstrahls immer quasi exakt rechtwinklig abgelenkt wird und der restliche Strahlanteil durch den Strahlteiler hindurchgelassen werden kann, ohne dass ein Detektor diesen Lichtstrahl detektiert, außerdem in einer zweiten Betriebsweise des Strahlteilers ein einfallender Laserstrahl anteilig auf einen in unmittelbarer Nähe des Strahlteilers befindlichen Detektor gelenkt wird und bei Bedarf ohne nennenswerten Parallel- oder Winkel-Versatz anteilig aus dem Strahlteiler austreten kann, in einer dritten Betriebsweise des Strahlteilers ein einfallender Laserstrahl anteilig praktisch rechtwinklig zur Einfallsrichtung abgelenkt wird und gleichzeitig anteilig auf einen Detektor auftrifft, welcher auch hier in unmittelbarer Nähe (Entfernung weniger als 10 mm) des Strahlteilers angeordnet ist oder sogar mit dem Strahlteiler zu einer Einheit verbunden ist.

Dementsprechend kennzeichnet sich die Erfindung dadurch, dass eine Meßvorrichtung enthaltend ein optisches Element in Form eines Strahlteilers zur Bestimmung von Kenngrößen an Werkzeugmaschinen bereitgestellt wird, welche folgende Charakteristika aufweist:
- ein Pentaprisma und ein fünfkantiges Prisma stehen über eine teilverspiegelnde Schicht in unmittelbarem Kontakt oder sind miteinander verklebt
- das Pentaprisma und/oder das fünfkantige Prisma weist zusätzlich eine zumindest teilreflektierende Seitenfläche auf, welche jedoch auch als vollreflektierende Seitenfläche ausgestaltet sein kann
- an eines oder beide der genannten Prismen ist bzw. sind ein- oder zweidimensional auslesbare optoelektronische Detektoren angebracht; bevorzugt sind diese mittels optischem Klebwerkstoff an dem bzw. den Prismen unverlierbar befestigt.

Von erheblichem Kostenvorteil ist es, wenn beide der genannten Prismen von gleicher Grundgestalt sind, insbesondere dann, wenn die vorgesehene Grundgestalt derjenigen handelsüblicher und marktgängiger Pentaprismen entspricht.

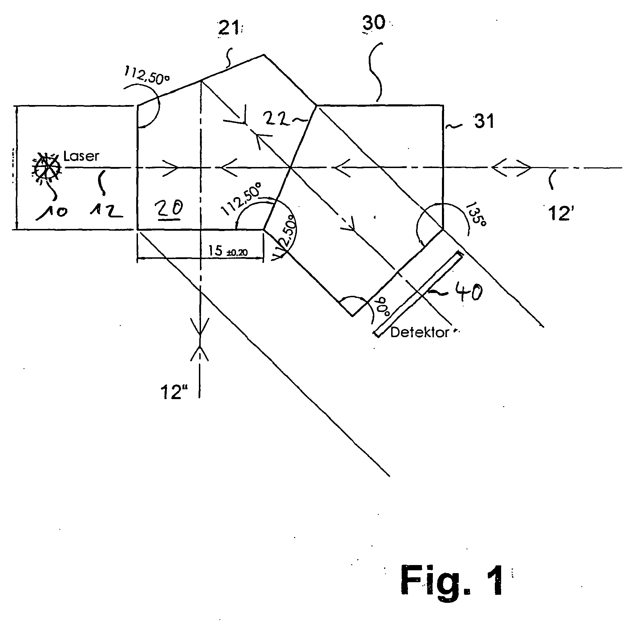

Die Erfindung wird im folgenden anhand der Zeichnung Fig. 1 bis 5 beschrieben.

Wie in Fig. 1 in einer Querschnittsansicht gezeigt, besteht die Erfindung aus zwei miteinander verbundenen, bevorzugt miteinander verklebten transparenten optischen Prismen 20 und 30 sowie einem ein- oder zweidimensional auslesbaren optoelektronischen Detektor 40. Die Längsachsen der Prismen sind somit parallel ausgerichtet. Der Detektor 40 ist relativ nah am Prisma 30 angebracht (bevorzugter Abstand: weniger als 15 mm) oder zweckmäßigerweise mit diesem mittels eines optischen Klebers oder Kontaktmediums verklebt. Zwischen Prisma und Detektor kann jedoch ein Grau- oder anderes optisches (z.B. Farb-)Filter (nicht gezeigt) vorgesehen sein. - Prisma 21 ist als herkömmliches Pentaprisma ausgelegt und weist bevorzugt eine vollverspiegelte Seitenfläche 21 auf. Die Seitenfläche 22 ist teilverspiegelt und weist bevorzugt ein Reflexions/Transmissionsverhältnis von 50% / 50% auf. Ein von einem extern angeordneten Laser 10 oder einer anderen kollimierten Lichtquelle ausgehender Lichtstrahl 12 kann in der in der Zeichnung gezeigten Weise durch die Prismenkombination mit ca. 50 % Intensität bzw. Abschwächung hindurchtreten. Er tritt an der Oberfläche 31 des Prismas 30 mit nur relativ geringem Parallelversatz als Lichtstrahl 12' aus; bei orthogonaler Inzidenz des Lichtstrahles 12 auf das Prisma 20 sogar ohne Parallelversatz, relativ zum einfallenden Lichtstrahl. Gleichzeitig tritt, wie gezeichnet, der an Seitenfläche 22 abgeteilte Lichtstrahl nach Reflektion an der Ober- bzw. Seitenfläche 21 als senkrecht zu Strahl 12 stehender Lichtstrahl 12" aus dem Prisma 20 aus, und zwar ebenfalls mit einer Intensität von 50% des Lichtstrahles 12.

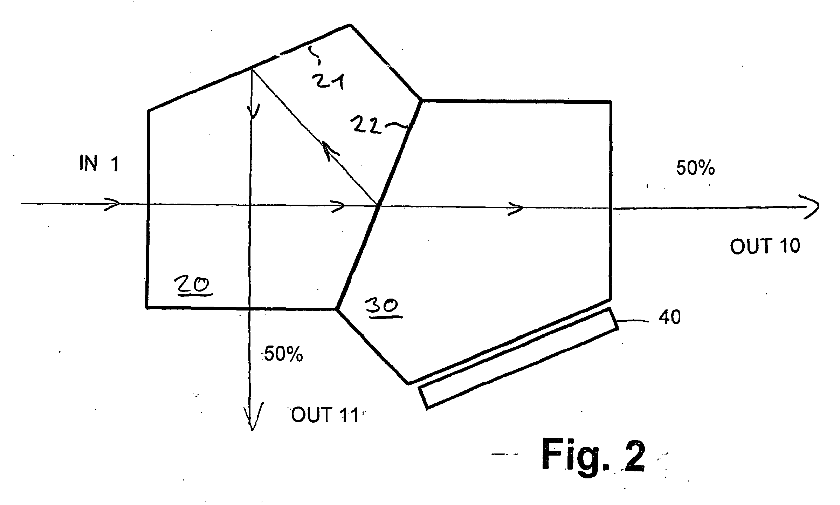

Diese erste Betriebsweise wird noch einmal in Fig. 2 dargestellt, in welcher jedoch nicht nur Prisma 20 als standardmäßiges Pentaprisma ausgelegt ist, sondern ebenso auch das Prisma 30 eine solche Form aufweist. In dieser Ausgestaltung kann eine kostengünstigere Anordnung bereitgestellt werden, ohne vom allgemeinen Erfindungsgedanken abzuweichen. - In Fig. 2 wird der einfallende Lichtstrahl mit In 1 bezeichnet, während der parallel zu diesem austretende Lichtstrahl mit Out 10 bezeichnet wird. Der orthogonal dazu austretende Lichtstrahl wird mit Out 11 bezeichnet. Wie aus Fig. 2 ersichtlich, fällt in dieser ersten Betriebsweise kein Lichtstrahl auf den Detektor 40, so daß sich eine Positionsbestimmung für einen solchen Lichtstrahl erübrigt bzw. nicht vorgesehen ist.

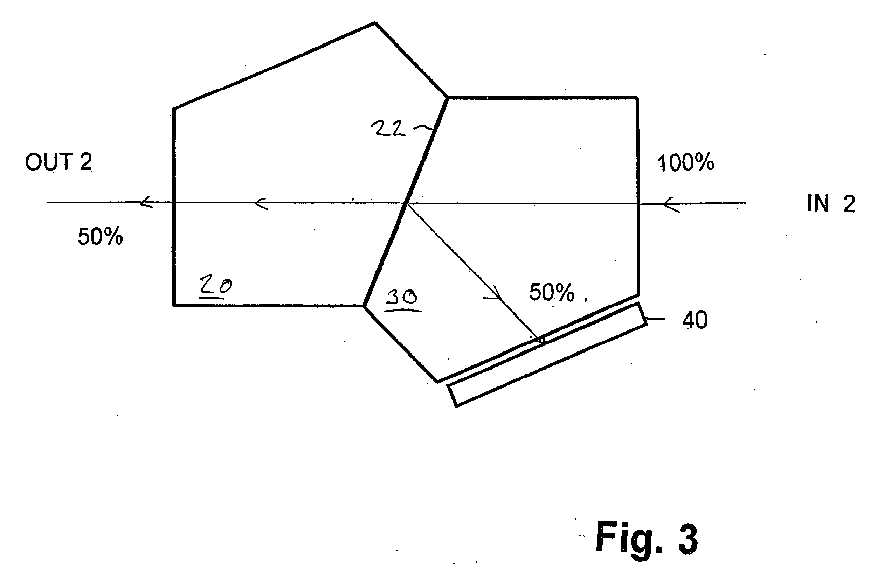

In einer zweiten Betriebsweise gemäß Fig. 3 ist die Einstrahlrichtung umgekehrt, d.h. der austretende Strahl Out 10 der Fig. 2 entspricht einem auf Prisma 30 einfallenden Lichtstrahl In2 der Fig. 3. Dieser tritt anteilig, ohne Winkelversatz und mit nur unwesentlichem Parallelversatz aus dem Prisma 20 aus, wenn auch in der Intensität um z.B. 50% reduziert. Der an der teilverspiegelten Oberfläche 22 reflektierte Strahl beleuchtet mit 50% der ursprünglichen Intensität den Detektor 40. Auch in diesem Falle ist der Detektor 40 vorteilhafterweise an das Prisma 30 angeklebt. Wiewohl im Falle der Fig. 3 keine senkrechte Inzidenz dieses Teilstrahls auf den Detektor erfolgt, ist dies eher von meßtechnischem Vorteil, da die scheinbare Ortsauflösung des Detektors dann in einer der vorzugsweise zwei verwendeten Kordinatenrichtungen projektionsbedingt etwas vergrößert erscheint. Diesem Vorteil steht allerdings entgegen, dass eine zugehörige Auswerte-Software aufwendiger zu gestalten ist.

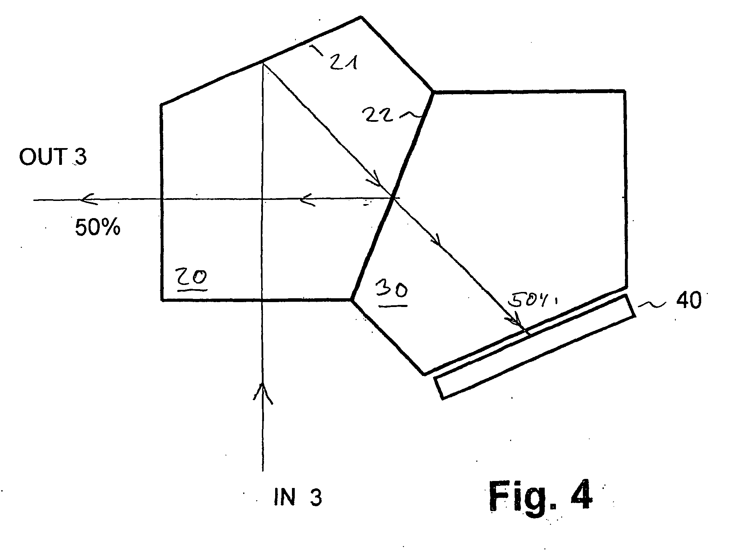

In einer dritten Betriebsweise gemäß Fig. 4 wird eine dritte Einstrahlrichtung gewählt, wobei ein einfallender Strahl In 3 vorgesehen ist, welcher dem Austrittsstrahl Out 11 der Fig. 2 entspricht. Wie aus Fig. 4 ersichtlich, wird dieser Strahl an der reflektierenden Seitenfläche 21 des Prismas 20 voll reflektiert und trifft auf die teilverspiegelte Fläche 22, geht anteilig (z.B. 50% ) durch diese hindurch und fällt mit z.B. 50 % Intensität auf den Detektor 40, wo der Auftreffpunkt des zuletzt genannten Strahls nach zwei Koordinaten in an sich bekannter Art und Weise ermittelt werden kann, wie dies auch für die Situation aus Fig. 3 gilt. Der an teilverspiegelter Fläche 22 teilreflektierte Anteil kann wie gezeigt das Pentaprisma 20 um 90° abgelenkt verlassen, und zwar im wesentlichen unabhängig von einer Drehstellung der Prismenkombination um eine Drehachse, welche senkrecht zur Papierebene steht.

In einer weiteren Betriebsweise der Erfindung wird neben einem ersten optoelektronischen Detektor 40 ein zweiter dieser Art vorgesehen (Bezugsziffer 50).

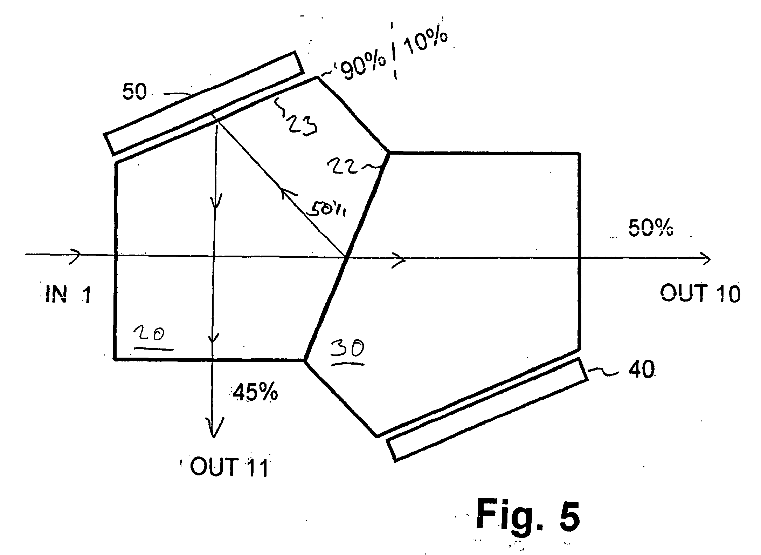

Anstelle der voll reflektierenden Seitenfläche 21 wird in diesem Falle eine teilreflektierende vorgesehen (Bezugszeichen 23). Diese kann z.B. ein Reflexions-/Transmissionsverhältnis von 90% / 10% aufweisen, so daß zumindest ein geringer Anteil der dort reflektierten Lichtstrahlen auf den Detektor 50 einfallen können. Dessen Wirkungsweise ist ganz analog zu der des Detektors 40; in an sich bekannten Vorgehensweisen kann entweder der Schwerpunkt des einfallenden Lichtes mittels PSD-Bautelen elektronisch ermittelt werden, oder es kann mittels pixelorientierten Sensoren auf die lokale Intenistätsverteilung des einfallenden Lichtstrahls geschlossen werden. Insbesondere kann auf diese Weise unter Zuhilfenahme einer nachgeschalteten Elektronik das Zentrum oder ein Schwerpunkt eines auf die teilreflektierende Fläche 23 fallenden Laserstrahls ausfindig gemacht werden. Mit Hilfe des Detektors 50 können also zusätzliche Messdaten bereitgestellt werden, welche insbesondere die Parallel-Abweichung des einfallenden Strahles In1 von einer vordefinierten Längsachse der Prismenkombination ausweisen. Da auf diese Weise ein - bis auf die Verspiegelungseigenschaften - vergleichsweise symmetrisch aufgebautes optisches Element geschaffen wird, werden dessen im Prinzip nicht unerhebliche Gestehungskosten auf einen möglichst niedrigen Wert reduziert. - Die weitere Funktionalität der in Fig. 5 gezeigten Anordnung ähnelt der, wie sie für Fig. 2 bis 4 erörtert wird.

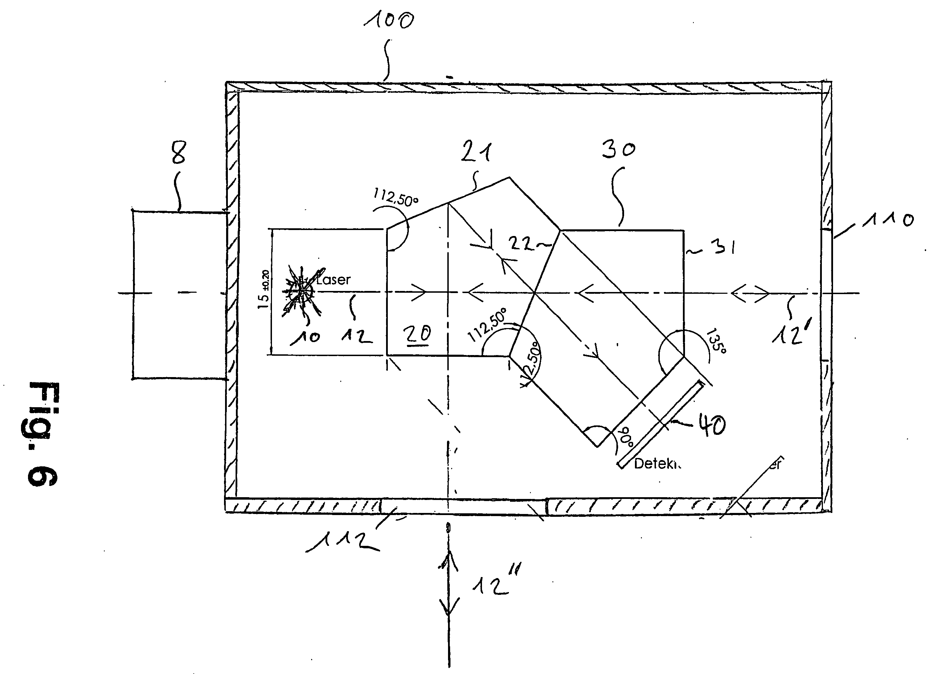

In Fig. 6 wird dargestellt, wie die erfindungsgemäße Kombination bestehend aus einer Lichtquelle 10, zweier Prismen 20, 30 und eines zugehörigen Detektors 40 innerhalb eines z.B. zylindrischen Gehäuses 100 angeordnet sein kann. Das Gehäuse kann mittels eines zylindrischen Spanndorns 8 in einer Werkzeugmaschine, z.B. einem Drehautomaten, zur Vermessung derselben eingespannt sein. Dementsprechend weist das Gehäuse 100 zwei Fenster 110, 112 auf, durch die die Meß-Strahlen 12' bzw 12" ein- und/oder austreten können. Wie obenstehend erwähnt, ist es in diesem Zusammenhang nützlich, mindestens zwei solcher Anordnungen gleichzeitig zu verwenden, so dass diese ein kombiniertes Meßgerät darstellen. Die genannten zwei Anordnungen sind derart ausgelegt, dass mit zeitlich gemultiplexten Lichtstrahlen gearbeitet werden kann. Das heisst, dass sukzessive einer nach dem anderen der erzeugbaren Lichtstrahlen 12 in Aktion tritt. Die Bereitstellung von in zeitlicher Reihenfolge auszusendenden Laserstrahlen und deren Positionsbestimmung mittels mehrerer optoelektronischer Detektoren kann als an sich bekannt gelten.

## Patentansprüche

1. Meßvorrichtung enthaltend ein optisches Element in Form eines Strahlteilers, geeignet insbesondere zur Bestimmung von Kenngrößen an Werkzeugmaschinen, **dadurch gekennzeichnet, daß**
- ein Pentaprisma (20) und ein fünfflächiges Prisma (30) über eine teilreflektierende Schicht (22) in unmittelbarem Kontakt stehen oder miteinander verklebt sind
- das Pentaprisma (20) eine teilreflektierende Seitenfläche (23) oder eine vollreflektierende Seitenfläche (21) aufweist
- zumindest ein (ein- oder zweidimensional auslesbarer) optoelektronischer Detektor (40, 50) parallel zu einer Fläche eines der genannten Prismen (20, 30) angebracht ist,
dass bei einem ersten Strahlengang im optischen Element
- ein erster Teil (12', OUT 10) eines auf das optische Element auftreffenden Lichtstrahls (12) im wesentlichen geradlinig durch das optische Element tritt,
- ein zweiter Teil (12", OUT 11) eines Lichtstrahls (12) das optische Element in einem rechten Winkel zum auftreffenden Lichtstrahl (12, 12') verlässt,
dass bei einem zweiten Strahlengang im optischen Element
- ein erster Teil eines auf das optische Element auftreffenden Lichtstrahls (IN 2) auf den Detektor (40) trifft
- ein zweiter Teil (OUT 2) eines auf das optische Element auftreffenden Lichtstrahls (IN 2) im wesentlichen geradlinig durch das optische Element tritt,
und dass bei einem dritten Strahlengang im optischen Element
- ein erster Teil eines auf das optische Element auftreffenden Lichtstrahls (IN 3), der im wesentlichen senkrecht verläuft zu dem auf das optische Element auftreffenden Lichtstrahl (IN 2) im zweiten Strahlengang, auf den Detektor (40) trifft und
- ein zweiter Teil (OUT 3) eines auf das optische Element auftreffenden Lichtstrahls (IN 3) das optische Element in einem rechtem Winkel zum auftreffenden Lichtstrahl (IN 3) verlässt.

2. Optisches Element nach Anspruch 1, **dadurch gekennzeichnet, dass** der oder die zweidimensional auslesbaren optoelektronischen Detektoren (40, 50) an das bzw. die Prismen (20, 30) mit optischem Klebwerkstoff angeklebt sind.

3. Optisches Element nach Anspruch 1, **dadurch gekennzeichnet, dass** die Prismen (20, 30) von gleicher Grundgestalt sind.

4. Optisches Element nach einem der vorhergehenden Ansprüche, **dadurch gekennzeichnet, dass** die Prismen (20, 30) die Grundgestalt handelsüblicher Pentaprismen aufweisen.

5. Verwendung einer Vorrichtung, welche ein optisches Element nach einem der Ansprüche 1-4 enthält, in einem Verfahren zur Vermessung von Werkzeugmaschinen.

## Claims

1. Measuring device containing an optical element in the form of a beam splitter, suitable in particular for determining characteristic parameters on machine tools,
**characterized in that**
- a pentaprism (20) and a pentahedral prism (30) are in direct contact or adhesively bonded to one another by means of a partly reflective layer (22),
- the pentaprism (20) has a partly reflective side face (23) or a fully reflective side face (21),
- at least one (one- or two- dimensionally readable) optoelectronic detector (40, 50) is fitted parallel to a face of one of the aforementioned prisms (20, 30),
**in that** in a first beam path in the optical element
- a first part (12', OUT 10) of a light beam (12) impinging on the optical element passes substantially rectilinearly through the optical element,
- a second part (12'', OUT 11) of a light beam (12) leaves the optical element at a right angle with respect to the impinging light beam (12, 12'),
**in that** in a second beam path in the optical element
- a first part of a light beam (IN 2) impinging on the optical element impinges on the detector (40),
- a second part (OUT 2) of a light beam (IN 2) impinging on the optical element passes substantially rectilinearly through the optical element,
and **in that** in a third beam path in the optical element
- a first part of a light beam (IN 3) impinging on the optical element, which runs substantially perpendicular to the light beam (IN 2) impinging on the optical element in the second beam path, impinges on the detector (40), and
- a second part (OUT 3) of a light beam (IN 3) impinging on the optical element leaves the optical element at a right angle with respect to the impinging light beam (IN 3).

2. Optical element according to Claim 1, **characterized in that** the two-dimensionally readable optoelectronic detector or detectors (40, 50) is or are adhesively bonded onto the prism or prisms (20, 30) using optical adhesive material.

3. Optical element according to Claim 1, **characterized in that** the prisms (20, 30) are of the same basic configuration.

4. Optical element according to any of the preceding claims, **characterized in that** the prisms (20, 30) have the basic configuration of commercially available pentaprisms.

5. Use of a device containing an optical element according to any of Claims 1-4 in a method for measuring machine tools.

## Revendications

1. Dispositif de mesure contenant un élément optique sous la forme d'un séparateur de rayon conçu notamment pour déterminer des grandeurs caractéristiques sur des machines-outils, **caractérisé en ce que**
- un pentaprisme (20) et un prisme à cinq faces (30) se trouvent en contact direct ou sont collés entre eux par le biais d'une couche partiellement réfléchissante,
- le pentaprisme (20) présente une face latérale partiellement réfléchissante (23) ou une face latérale entièrement réfléchissante (21),
- au moins un détecteur optoélectronique (40, 50) (à lecture uni- ou bidimensionnelle) est monté parallèlement à une face de l'un desdits prismes (20, 30),
**en ce qu'**avec un premier trajet de rayon dans l'élément optique
- une première partie (12', OUT 10) d'un rayon lumineux (12) qui vient frapper l'élément optique traverse l'élément optique pour l'essentiel en ligne droite,
- une deuxième partie (12'', OUT 11) d'un rayon lumineux (12) quitte l'élément optique sous un angle droit par rapport au rayon lumineux incident (12, 12'), **en ce qu'**avec un deuxième trajet de rayon dans l'élément optique
- une première partie d'un rayon lumineux (IN 2) qui vient frapper l'élément optique rencontre le détecteur (40),
- une deuxième partie (OUT 2) d'un rayon lumineux (IN 2) qui vient trapper l'élément optique traverse l'élément optique pour l'essentiel en ligne droite,
et **en ce qu'**avec un troisième trajet de rayon dans l'élément optique
- une première partie d'un rayon lumineux (IN 3) qui vient frapper l'élément optique, lequel se propage pour l'essentiel perpendiculairement au rayon lumineux (IN 2) qui vient frapper l'élément optique dans le deuxième trajet de rayon, rencontre le détecteur (40) et
- une deuxième partie (OUT 3) d'un rayon lumineux (IN 3) qui vient trapper l'élément optique quitte l'élément optique sous un angle droit par rapport au rayon lumineux incident (IN 3).

2. Élément optique selon la revendication 1, **caractérisé en ce que** le ou les détecteurs optoélectroniques (40, 50) à lecture bidimensionnelle sont collés sur le ou les prismes (20, 30) avec de la colle optique.

3. Élément optique selon la revendication 1, **caractérisé en ce que** les prismes (20, 30) sont de la même structure de base.

4. Élément optique selon l'une des revendications précédentes, **caractérisé en ce que** les prismes (20, 30) présentent la structure de base de pentaprismes courants.

5. Utilisation d'un dispositif qui contient un élément optique selon l'une des revendications 1 à 4 dans un procédé de mesurage des machines-outils.
